# EUROPEAN PATENT SPECIFICATION

(11) **EP 2 405 556 B1**
(45) Date of publication and mention of the grant of the patent: **23.01.2019**
(21) Application number: 10748673.0
(22) Date of filing: 26.02.2010
(51) Int. Cl.: H02J 50/12

(54) **NON-CONTACT POWER SUPPLYING DEVICE AND NON-CONTACT POWER SUPPLYING METHOD**
KONTAKTLOSE STROMVERSORGUNGSVORRICHTUNG UND KONTAKTLOSES STROMVERSORGUNGSVERFAHREN
DISPOSITIF D'ALIMENTATION ÉLECTRIQUE SANS CONTACT ET PROCÉDÉ D'ALIMENTATION ÉLECTRIQUE SANS CONTACT

(30) Priority: 06.03.2009 JP 2009052878; 27.01.2010 JP 2010015816
(43) Date of publication of application: 11.01.2012
(73) Proprietor: Nissan Motor Co., Ltd., Yokohama-shi, Kanagawa 221-0023 (JP)
(72) Inventor: KAI, Toshihiro, Atsugi-ahi Kanagawa 243-0123 (JP); KRAISORN, Throngnumachai, Atsugi-ahi Kanagawa 243-0123 (JP); HAYAMI, Yasuaki, Atsugi-ahi Kanagawa 243-0123 (JP)
(74) Representative: Grünecker Patent- und Rechtsanwälte PartG mbB
(86) International application number: PCT/JP2010/053041
(87) International publication number: WO 2010/101078

(56) References cited:
- EP-A2- 0 473 957
- WO-A1-2009/014125
- WO-A2-2009/023155
- JP-A- 2004 248 365
- US-A1- 2005 075 696
- US-A1- 2008 157 692
- US-A1- 2008 278 264
- ANDRE KURS ET AL.: 'Wireless Power Transfer via Strongly Coupled Magnetic Resonances' SCIENCE vol. 317, 06 July 2007, pages 83 - 86, XP002609542

## Description

### TECHNICAL FIELD

The present invention relates to a non-contact power supplying device and a non-contact power supplying method.

### BACKGROUND ART

Regarding a technology for transmitting electric power in a non-contact state, it is known that electric power is transmitted with the non-contact state by using a technique of electromagnetically resonating a power-feeding side and a power-receiving side at a common resonant frequency (Non Patent Literature 1).

US 2005/0075696 A1 discloses a wireless power transmitter for an implant which detects the impedance as viewed from the transmitter side and controls the frequency of the transmitted power in order to minimise the impedance.

### CITATION LIST

### [Non Patent Literature]

Non Patent Literature 1 : Karalis A. et al (Wireless Power Transfer via Strongly Coupled Magnetic Resonances) Science, vol. 317, no. 5834, pp. 83-86, 2007.

### SUMMARY OF THE INVENTION

However, because an input frequency of an oscillator provided in the power-feeding side is fixed in the conventional non-contact power supplying device, there has been a problem that an efficiency of electric power transmission is reduced in dependence upon a coupling state between the power-feeding side and the power-receiving side.

It is an object of the present invention to provide non-contact power supplying device and method devised to suppress the reduction of electric-power transmission efficiency even if the coupling state between the power-feeding side and the power-receiving side is varied.

According to the present invention as defined in the appended claims, the above-mentioned problem is solved by setting a frequency of AC power in accordance with a value of impedance viewed from the power-feeding side, within a predetermined frequency range.

### BRIEF EXPLANATION OF DRAWINGS

[FIG. 1A] A block diagram showing a non-contact power supplying device in one embodiment.
[FIG. 1B] A block diagram showing one example of a power-feeding resonator and a power-receiving resonator of FIG. 1A.
[FIG. 2A] A block diagram showing one example of a frequency-variable unit of FIG. 1A.
[FIG. 2B] A block diagram showing one example of a current control section of FIG. 2A.
[FIG. 2C] A block diagram showing one example of a switching-signal generating section of FIG. 2A.
[FIG. 3] A flowchart showing an operation of the non-contact power supplying device of FIG. 1A.
[FIG. 4A] A graph showing impedance with respect to frequency, which is detected by an impedance detecting unit of FIG. 1A.
[FIG. 4B] A graph showing impedance with respect to frequency in a case that a distance between the power-feeding resonator and the power-receiving resonator has been changed from the case of FIG. 4A.
[FIG. 5] A graph showing power-transmission efficiency with respect to the distance between the power-feeding resonator and the power-receiving resonator of the non-contact power supplying device of FIG. 1A.
[FIG. 6] A block diagram showing a non-contact power supplying device in another embodiment according to the present invention.

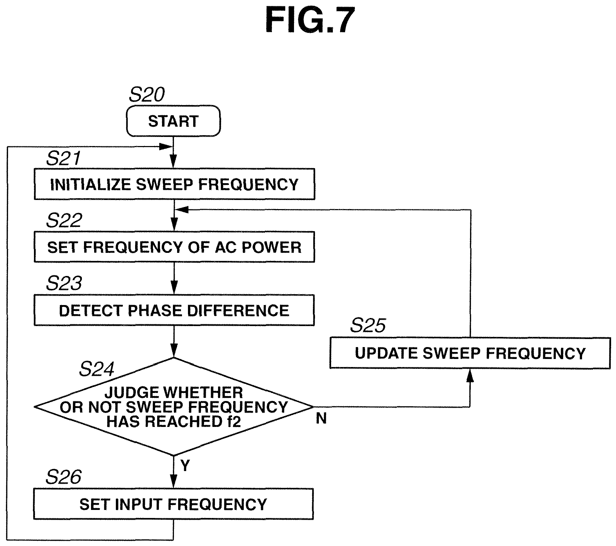

[FIG. 7] A flowchart showing an operation of the non-contact power supplying device of FIG. 6.
[FIG. 8] A graph (a) shows phase difference with respect to frequency of feeding power, which is detected by a phase-difference detecting unit of FIG. 6. A graph (b) shows phase difference with respect to the frequency, in a case that the difference between the power-feeding resonator and the power-receiving resonator has been changed from the case of graph (a).

### DESCRIPTION OF EMBODIMENTS

### <<First Embodiment>>

### << Configuration > >

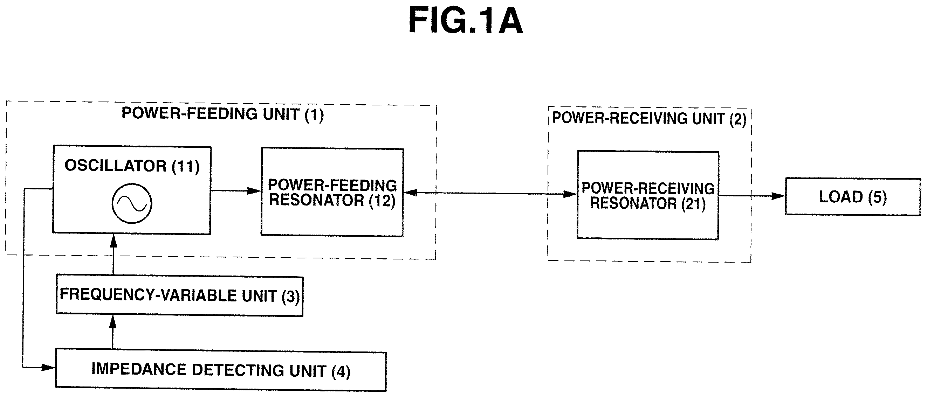

A non-contact power supplying device in a first embodiment includes a power-feeding unit 1 and a power-receiving unit 2 as shown in FIG. 1A. The power-feeding unit 1 wirelessly transmits (feeds) electric power to the power-receiving unit 2, and the power-receiving unit 2 wirelessly receives the electric power.

The power-feeding unit 1 includes an oscillator 11 and a power-feeding resonator 12. The oscillator 11 serves to output alternating-current (AC) power. The power-feeding resonator 12 serves to generate a magnetic field from the AC power inputted by the oscillator 11. On the other hand, the power-receiving unit 2 includes a power-receiving resonator 21. The power-receiving resonator 21 serves to receive electric power transmitted from the power-feeding resonator 12.

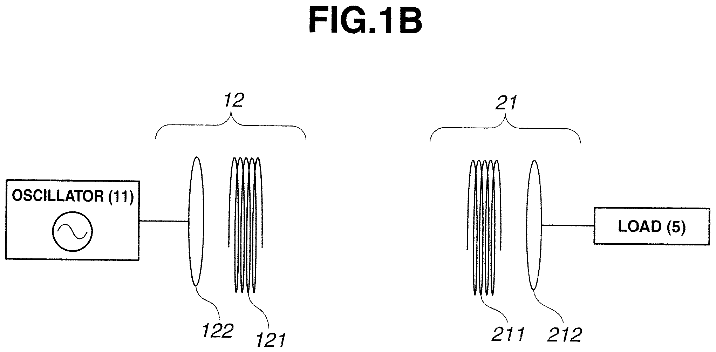

The power-feeding resonator 12 and the power-receiving resonator 21 are set to have a common (same) self-resonant frequency f0. In order to feed and receive electric power, the power-feeding resonator 12 includes an LC resonance coil 121, and the power-receiving resonator 21 includes an LC resonance coil 211, as shown in FIG. 1B. Both ends of each of the LC resonance coil 121 and the LC resonance coil 211 are open. The LC resonance coil 121 for power-feeding has only to be set to have a self-resonant frequency equal to that of the LC resonance coil 211 for power-receiving. That is, coil shape and size (such as a winding number, a thickness and a winding pitch) of the LC resonance coil 121 do not necessarily need to be equal to those of the LC resonance coil 211. Moreover, since the LC resonance coil 121 and the LC resonance coil 211 have only to have the identical self-resonant frequency, a condenser may be externally attached to the power-feeding LC resonance coil 121 and/or the power-receiving LC resonance coil 211. That is, the setting for each self-resonant frequency can be performed also by properly setting a value of condenser capacity, besides by setting the coil shape and size.

The power-feeding resonator 12 including the power-feeding LC resonance coil 121 may include a one-turn coil (primary coil) 122 in order not to vary the self-resonant frequency of the LC resonance coil 121. Both ends of the one-turn coil 122 are connected. This one-turn coil 122 is preferably provided coaxially to the power-feeding LC resonance coil 121, and is configured to supply electric power to the power-feeding LC resonance coil 121 by electromagnetic induction. In the same manner, the power-receiving resonator 21 including the power-receiving LC resonance coil 211 may include a one-turn coil (secondary coil) 212 in order not to vary the self-resonant frequency of the LC resonance coil 211. Both ends of the one-turn coil 212 are connected. This one-turn coil 212 is preferably provided coaxially to the power-receiving LC resonance coil 211, and is configured to receive electric power from the power-receiving LC resonance coil 211 by electromagnetic induction.

A principal of power transmission by a resonance method will now be explained. In the resonance method, two LC resonance coils (121 and 211) having a common self-resonant frequency (natural frequency) resonate with each other through magnetic field, in the same manner that two tuning forks resonate with each other. Thereby, electric power is wirelessly transferred from one coil to another coil.

That is, when a high-frequency alternating-current power is inputted into the one-turn coil 122 of the power-feeding resonator 12 by the oscillator 11 shown in FIG. 1B, magnetic field is generated at the one-turn coil 122. Thereby, a high-frequency alternating-current power is generated at the LC resonance coil 121 by electromagnetic induction. The LC resonance coil 121 functions as an LC resonator having an inductance of coil itself and stray capacitances between lead wires (i.e., stray capacitances between various parts of wound wire). By magnetic-field resonance, the LC resonance coil 121 is magnetically coupled with the LC resonance coil 211 of the power-receiving resonator 21 which has a self-resonant frequency equal to that of the LC resonance coil 121. Thereby, electric power is transmitted to the LC resonance coil 211. By the received electric power from the LC resonance coil 121, a magnetic field is generated at the power-receiving LC resonance coil 211. Thereby, a high-frequency alternating-current power is generated at the secondary coil 212 by means of electromagnetic induction, so that electric power is supplied to a load 5. In a case that direct-current power needs to be supplied to the load 5, an AC converter such as a rectifier is provided between the power-receiving resonator 21 and the load 5.

The non-contact power supplying device in this embodiment can transmit electric power wirelessly (without wire) by way of such a resonance phenomenon. Moreover, since the non-contact power supplying device in this embodiment uses the resonance phenomenon, electric power can be transmitted without interfering with external equipments generating radio waves.

The electric power received by the power-receiving resonator 21 is fed to the load 5. This load 5 is, for example, an electrically-powered equipment such as an electric motor, or a secondary battery or the like.

In the conventional non-contact power supplying device, a frequency of alternating-current power which is inputted into an LC resonance coil that is a resonator of the power-feeding side is equal to a resonant frequency given to both of the power-feeding side and the power-receiving side, and moreover, is a fixed value. Hence, if the coupling state between the power-feeding-side LC resonance coil and a power-receiving-side LC resonance coil has varied, there is a risk that a power transmission efficiency for an electric power which can be received by a power-receiving-side resonator is reduced.

The above-mentioned variation of the coupling state means, for example, a case where a distance between a power-feeding-side resonator and the power-receiving-side resonator has varied, or a case where the power-feeding-side resonator or the power-receiving-side resonator has a value of resonant frequency different from a self-resonant frequency set initially as original design, due to manufacturing reasons.

In the non-contact power supplying device in this embodiment, the frequency of alternating-current power of the oscillator 11 is set according to a value of impedance viewed (obtained) from the power-feeding side, in order to maintain the power transmission efficiency even if the coupling state between the power-feeding resonator 12 and the power-receiving resonator 21 has varied.

That is, as shown in FIG. 1A, an impedance detecting unit 4 detects impedance values of power supplying path as viewed from the power-feeding side, within a predetermined frequency range including the self-resonant frequency f0 of the power-feeding resonator 12 and the power-receiving resonator 21, on the basis of control signals derived from a frequency-variable unit 3. Then, the impedance detecting unit 4 outputs the detected impedance values to the frequency-variable unit 3. Frequency values falling within the predetermined frequency range over which the impedance is scanned will also be referred to as sweep frequencies.

The frequency-variable unit 3 reads the impedance values which have been detected by the impedance detecting unit 4 within the sweep frequencies. Then, the frequency-variable unit 3 detects (determines) a frequency value that causes an absolute value of the detected impedance to become its local minimum value. Then, the frequency-variable unit 3 outputs the frequency value causing this local minimum value of impedance absolute value, to the oscillator 11. The oscillator 11 sets the frequency value outputted from the frequency-variable unit 3, as the frequency of the alternating-current power. The oscillator 11 outputs the alternating-current power having the set frequency value, to the power-feeding resonator 12. That is, since the impedance as viewed from the power-feeding side is varied according to the junction state between the power-feeding resonator 12 and the power-receiving resonator 21, the non-contact power supplying device in this embodiment detects this impedance and sets the alternating-current power at a frequency value resulting in a high power-transmission efficiency.

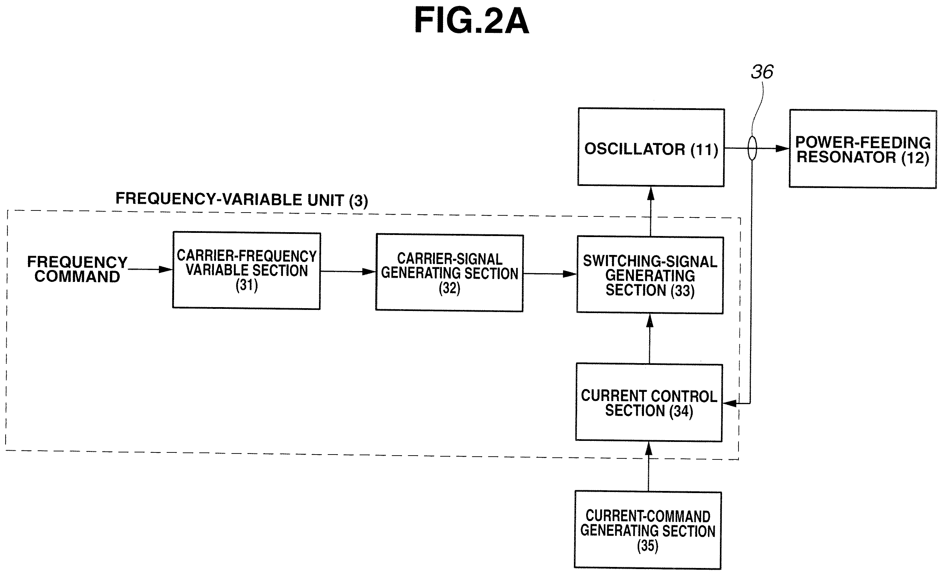

A method of changing the frequency by the frequency-variable unit 3 is, for example, as follows. FIG. 2A is a block diagram showing one example of the frequency-variable unit 3 shown in FIG. 1A. The frequency-variable unit 3 includes a carrier-frequency variable section 31, a carrier-signal generating section 32, a switching-signal generating section 33, a current control section 34, a current-command generating section 35 and a current sensing section 36.

A command for a frequency value which should be set at the oscillator 11 is inputted into the carrier-frequency variable section 31. In this embodiment, this is a frequency value giving the local minimum value of impedance absolute value as viewed from the power-feeding side.

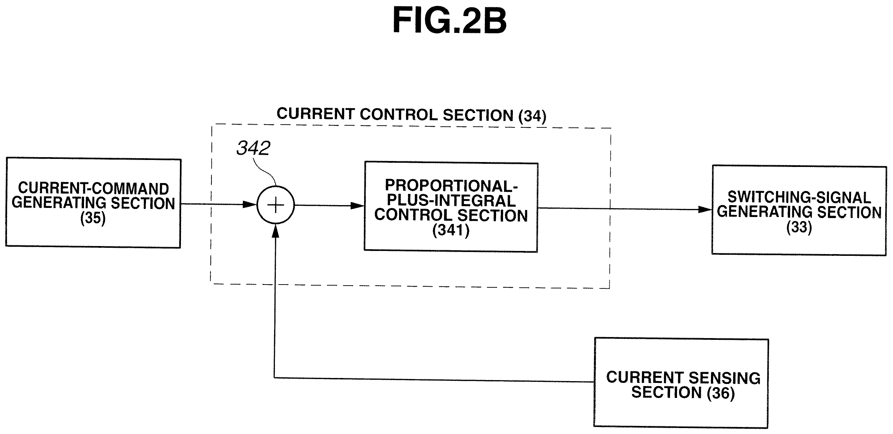

As shown in FIG. 2B, the current control section 34 includes a proportional-plus-integral control section 341 and an adder (addition calculating section) 342. The current control section 34 reads a current command value derived from the current-command generating section 35 and a sensed current value derived from the current sensing section 36, for the calculation by the adder 342. The proportional-plus-integral control section 341 controls the calculation result of the adder 342 by way of P-I control, and outputs an obtained voltage command to the switching-signal generating section 33. Instead of this P-I control, the proportional-plus-integral control section 341 can perform a proportional control (P control) or a proportional-plus-integral-plus-derivative control (P-I-D control).

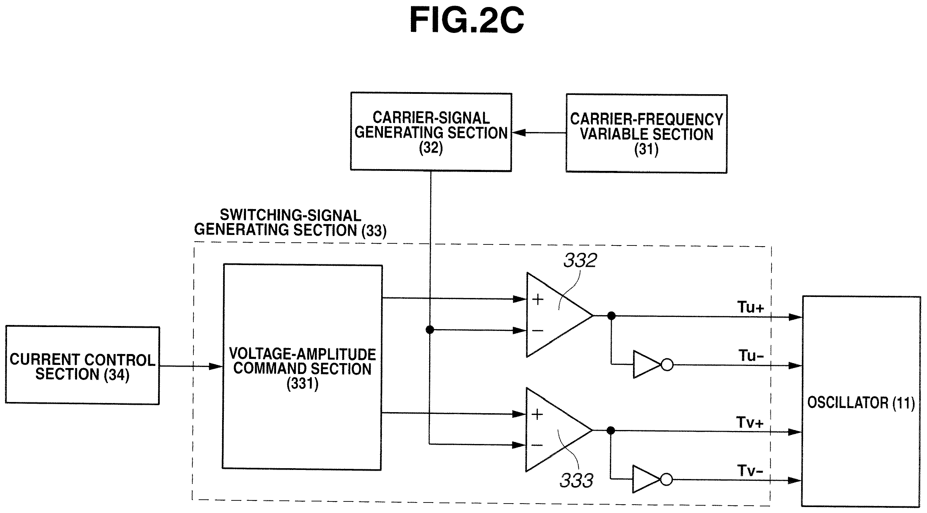

The switching-signal generating section 33 performs a PWM comparison on the basis of the voltage command derived from the current control section 34, and outputs ON/OFF signals to switching elements provided inside the oscillator 11. That is, as shown in FIG. 2C, the switching-signal generating section 33 includes a voltage-amplitude command section 331 and comparators 332 and 333. The voltage-amplitude command section 331 serves to produce a voltage command value from the output of the current control section 34. Each of the comparators 332 and 333 serves to compare the produced voltage command value with a carrier signal, as to a magnitude relation therebetween. That is, each of the comparators 332 and 333 compares the voltage command value with the triangle-wave-shaped carrier signal derived from the carrier-signal generating section 32. Then, each of the comparators 332 and 333 outputs the ON/OFF signals to the oscillator 11, in dependence upon the magnitude relation between the voltage command value with the carrier signal.

The carrier-frequency variable section 31 controls the carrier-signal generating section 32 in order to vary a carrier frequency on the basis of inputted set frequency. Thereby, the carrier-signal generating section 32 generates the carrier signal, and outputs the generated carrier signal to the switching-signal generating section 33.

Next, operations according to the first embodiment will now be explained.

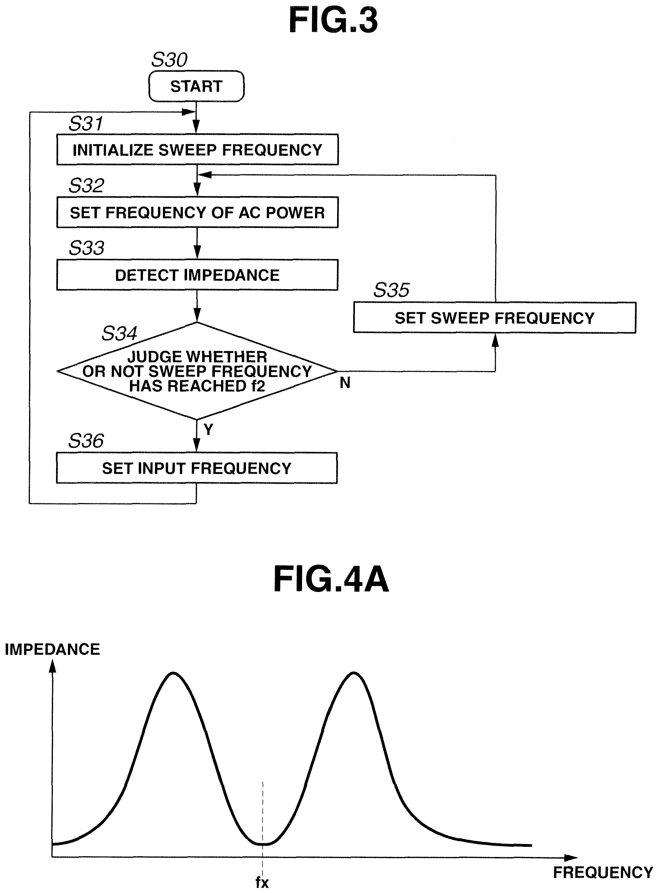

At step S30 in FIG. 3, the frequency-variable unit 3 starts a processing for searching an optimum frequency value of alternating-current power. The self-resonant frequencies of the power-feeding resonator 12 and the power-receiving resonator 21 are both equal to f0. Moreover, the sweep frequency ranges from f1 to f2, in which the self-resonant frequency f0 is included. For example, the range of sweep frequency can be set by adding and subtracting twenty percent of the self-resonant frequency f0 to/from the self-resonant frequency f0, i.e., as ±20% range of the self-resonant frequency f0. However, this range is changed appropriately with environment, and hence, may be ±10% range or ±30% range of the self-resonant frequency f0.

At step S31, the frequency-variable unit 3 carries out an initialization of the sweep frequency. At this time, the sweep frequency value is set at f1. At step S32, the frequency-variable unit 3 sets the frequency of alternating-current power of the oscillator 11. At this time, the frequency of alternating-current power of the oscillator 11 is equal to f1 because of the processing of step S31. The power-feeding resonator 12 to which the alternating current having the frequency value equal to f1 has been inputted generates a magnetic field according to f1. The power-receiving resonator 21 receives power by use of the magnetic field according to f1.

Next, at step S33, the impedance detecting unit 4 detects an impedance value as viewed from the power-feeding side. Then, the impedance value detected by the impedance detecting unit 4 is transferred to the frequency-variable unit 3.

At step S34, the frequency-variable unit 3 judges whether or not the settings of all the frequency values given within the predetermined range have been finished, i.e., whether or not the sweep frequency has already reached f2.

If the sweep frequency has not yet reached f2, the sweep frequency is updated to a next frequency value (at step S35). Then, the program returns to step S32, and the impedance is detected by using the next frequency value.

If the sweep frequency has already reached f2 at step S34, the program proceeds to step S36. At step S36, the frequency-variable unit 3 calculates a frequency value fx that causes the absolute value of impedance given by voltage and current of the feeding power to become its local minimum value. Then, the frequency-variable unit 3 sets the frequency value fx as an input frequency of alternating-current power for the oscillator 11.

The efficiency of feeding power as viewed from the power-feeding side becomes high when the absolute value of impedance takes its local minimum value. Hence, by setting the frequency value at which the impedance takes its local minimum value, as the frequency of alternating-current power for the oscillator 11; the efficiency of feeding power as viewed from the power-feeding side can be enhanced.

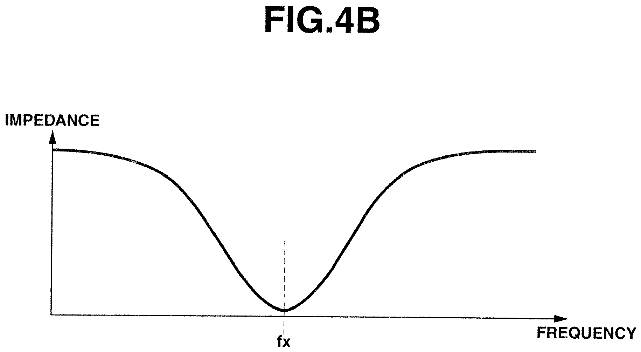

FIGS. 4A and 4B are views showing the impedance as viewed from the power-feeding side, with respect to the sweep frequency. These views of FIGS. 4A and 4B were obtained through the above-mentioned series of steps by the frequency-variable unit 3 and the impedance detecting unit 4. FIG. 4A shows a case where the distance between the power-feeding resonator 12 and the power-receiving resonator 21 is different from that of a case of FIG. 4B. As is clear from FIGS. 4A and 4B, when the distance between the power-feeding resonator 12 and the power-receiving resonator 21 is varied, an impedance characteristic relative to the frequency of alternating-current power is varied so that the efficiency of feeding power is reduced.

However, in the non-contact power supplying device according to the first embodiment, the frequency value that brings the impedance to its local minimum is set as the frequency of the oscillator 11. That is, even if the distance between the power-feeding resonator 12 and the power-receiving resonator 21 has been varied, a frequency value which enhances the power-feeding efficiency is set according to this distance variation. Therefore, the power-feeding efficiency can be enlarged regardless of the variation of distance.

In the non-contact power supplying device according to the first embodiment, in a case where a plurality of frequency values fx each of which produces a local minimum of impedance as viewed from the power-feeding side, one of the plurality of frequency values fx which is closest to the common resonant frequency of the power-feeding resonator 12 and the power-receiving resonator 21 may be set as the frequency of the alternating-current power.

In the non-contact power supplying device according to the first embodiment, the frequency of alternating-current power of the oscillator 11 is changed (determined) since the frequency value fx which causes the impedance as viewed from the power-feeding side to become its local minimum is set by the impedance detecting unit 4 and the frequency-variable unit 3. Thereby, in the non-contact power supplying device according to the first embodiment, the frequency of alternating-current power is changed (determined) in accordance with the coupling state between the power-feeding resonator 12 and the power-receiving resonator 21, so that the efficiency of the power feeding can be enhanced. Since the frequency value that can enlarge the power-feeding efficiency can be set without needing to detect a situation of the power-receiving side, a structure for detecting the power-feeding efficiency does not need to be provided to the power-receiving unit 2.

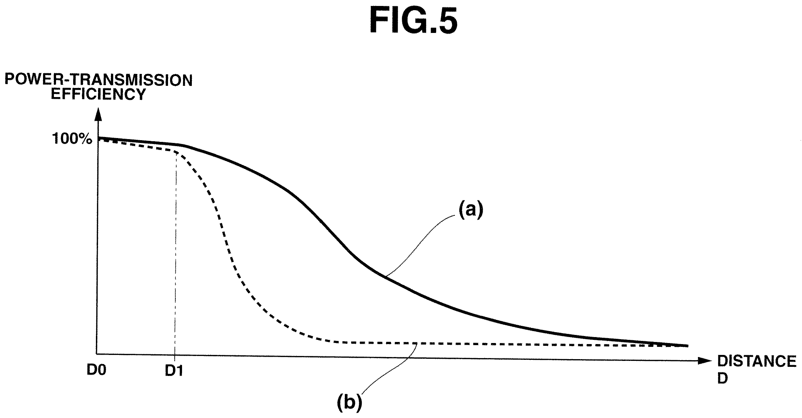

FIG. 5 is a view showing the power-transmission efficiency in a case that the distance between the power-feeding resonator 12 and the power-receiving resonator 21 is varied in the non-contact power supplying device according to the first embodiment, and also in a comparative non-contact power supplying device adapted to fix the frequency of alternating-current power of oscillator. A graph (a) depicted by a solid line shows the power-transmission efficiency of the non-contact power supplying device according to the first embodiment, and a graph (b) depicted by a dotted line shows the power-transmission efficiency of the non-contact power supplying device of comparative example.

Under a state where the frequency of alternating-current power of the oscillator had been set at the resonant frequency f0 of the power-feeding resonator 12 and the power-receiving resonator 21, a distance D0 between the power-feeding resonator 12 and the power-receiving resonator 21 was set so as to minimize the impedance detected by the impedance detecting unit 4 as viewed from the power-feeding side, as an initial condition for resonance. Moreover, an electric power obtained by the impedance detecting unit 4 at the time of the initial condition was defined as 100 %.

From this initial condition, the distance D between the power-feeding resonator 12 and the power-receiving resonator 21 is gradually enlarged in the first embodiment and in the comparative example. At this time, in the non-contact power supplying device according to the first embodiment, the frequency of alternating-current power of the oscillator 11 is changed by the frequency-variable unit 3 in accordance with the distance between the power-feeding resonator 12 and the power-receiving resonator 21 in order to suppress the reduction of power-receiving efficiency. Hence, in the non-contact power supplying device according to the first embodiment, the frequency of alternating-current power of the oscillator 11 takes a frequency value different from the frequency f0 given at the time of initial condition. On the other hand, the frequency of alternating-current power in the non-contact power supplying device of the comparative example is fixed to the resonant frequency f0.

As shown in FIG. 5, the power-transmission efficiency in the non-contact power supplying device of the comparative example is rapidly decreased when exceeding a point of the distance D1. However, the non-contact power supplying device according to the first embodiment maintains a high power-transmission efficiency even when exceeding the point of distance D1, without rapidly decreasing as the comparative example.

Thus, the non-contact power supplying device according to the first embodiment can suppress the reduction of the power-transmission efficiency even if the distance between the power-feeding resonator 12 and the power-receiving resonator 21 has been varied, as compared with the non-contact power supplying device of the comparative example. Moreover, even if the distance between the power-feeding resonator 12 and the power-receiving resonator 21 has been varied, the power-transmission efficiency can be maximized. Thereby, a distance at which the power transmission is achieved can be elongated.

The method of setting the frequency of alternating-current power of the oscillator 11 in accordance with the coupling state between the power-feeding resonator 12 and the power-receiving resonator 21 is not limited to the above-mentioned steps. That is, for example, the local minimum value of impedance may be detected from a gradient (differential value) of impedance, instead of employing a (negative) peak of impedance by sweeping (all frequency values given within) the predetermined frequency range.

In this case, in the non-contact power supplying device according to the first embodiment, the initial frequency value f1 among the sweep frequency values is set as the frequency of alternating-current power of the oscillator, at first. At this time, the impedance detecting unit 4 detects an impedance value. Next, the sweep frequency value fs updated subsequent to the frequency value f1 is set as the frequency of alternating-current power. At this time, the impedance detecting unit 4 detects an impedance value. At the same time, in the non-contact power supplying device according to the first embodiment, a gradient formed by the impedance value corresponding to the frequency value fs (the impedance value obtained at the time of setting the frequency value fs) and the impedance value corresponding to the frequency value f1 which was set before the frequency value fs is calculated in order to calculate the local minimum value of impedance as viewed from the power-feeding side.

If this gradient is negative, the sweep frequency continues to be updated so that the impedance continues to be detected. If the gradient is positive, it is determined that the impedance has reached its local minimum, and hence, the update of the sweep frequency is finished. Then, the frequency-variable unit 3 finally sets a frequency value indicated when the impedance just reached its local minimum, as the frequency of alternating-current power of the oscillator 11.

Thereby, as compared with the case that the above-mentioned predetermined frequency range is swept from f1 to f2, the local minimum value of impedance can be detected before the sweep frequency is updated to the frequency value f2. Therefore, the frequency value corresponding to the receiving power having a high power-transmission efficiency can be set more quickly.

Moreover, the frequency-variable unit 3 does not necessarily need to set a frequency value corresponding to the local minimum value of impedance. The frequency-variable unit 3 may set (determine) a frequency value corresponding to a time when the impedance detecting unit 4 detects an impedance value smaller than or equal to a certain threshold value, as the frequency of alternating-current power.

Moreover, the setting of AC-power frequency of the oscillator 11 according to the coupling state between the resonators 12 and 21 by the frequency-variable unit 3 is not necessary to be always carried out. For example, this setting may be carried out when the non-contact power supplying device according to the first embodiment is activated.

Alternatively, the non-contact power supplying device according to the first embodiment may be equipped with a distance sensor such as an infrared ray sensor for sensing the distance between the power-feeding resonator 12 and the power-receiving resonator 21. When this infrared ray sensor senses a change of the distance between the power-feeding resonator 12 and the power-receiving resonator 21, the frequency-variable unit 3 may set the frequency of alternating-current power of the oscillator 11 in accordance with the coupling state between the power-feeding resonator 12 and the power-receiving resonator 21.

Still alternatively, the frequency-variable unit 3 may set the frequency of alternating-current power of the oscillator 11 in accordance with the coupling state between the power-feeding resonator 12 and the power-receiving resonator 21, when the impedance detected by the impedance detecting unit 4 as viewed from the power-feeding side becomes higher than a predetermined threshold value.

Moreover, the frequency for the detection of the impedance detecting unit 4 does not necessarily need to be swept over whole of the predetermined frequency range f1∼f2. The frequency-variable unit 3 may set the frequency of alternating-current power of the oscillator 11 by using discrete values. Thereby, the non-contact power supplying device according to the first embodiment can set a frequency value corresponding to a relatively low impedance value among impedance values obtained by setting the above-mentioned discrete frequency values, as the frequency of alternating-current power of the oscillator 11.

Moreover, in the non-contact power supplying device according to the first embodiment, the frequency-variable unit 3 and/or the impedance detecting unit 4 can be arranged in any of the power-feeding unit 1 and the power-receiving unit 2. In a case that the frequency-variable unit 3 and/or the impedance detecting unit 4 are arranged in the power-receiving unit 2, a wireless communicative means for transmitting the set frequency value to the oscillator 11 of the power-feeding unit 1 and a wireless communicative means for detecting the impedance as viewed from the power-feeding side and for transmitting the detected impedance to the impedance detecting unit 4 are further provided.

Moreover, the non-contact power supplying device according to the first embodiment has an advantageous effect particularly in a case that a plurality of power-receiving units 2 are provided. For example, a case is conceivable that the non-contact power supplying device according to the first embodiment is mounted in a vehicle or the like while installing the power-receiving units 2 thereof in parts adapted to operate by electric power (such as a headlight and a rear speaker). However, when trying to supply electric power to one of the plurality of power-receiving units 2, there is a possibility that the coupling state between the resonators 12 and 21 is different among the plurality of power-receiving units 2 because the plurality of power-receiving units 2 have different distances from the power-feeding unit 1.

However, in the non-contact power supplying device according to the first embodiment, the frequency of alternating-current power can be set according to the coupling state of the resonators 12 and 21. That is, when electric power is supplied to one of the plurality power-receiving units 2 which is different from another of the plurality power-receiving units 2, the frequency of alternating-current signal is set (determined) according to receiving power between the power-feeding unit 1 and the one of the plurality of power-receiving units 2. Accordingly, the transmission of electric power is efficiently attained.

That is, the non-contact power supplying device according to the first embodiment can set an alternating-current frequency value that realizes an optimal power-transmission efficiency, in dependence upon each power-receiving unit 2. Moreover, because the power-feeding unit 1 is wirelessly coupled with the power-receiving unit 2, the non-contact power supplying device according to the first embodiment does not need an electrical wiring when being mounted in a vehicle or the like. Accordingly, a manufacturing process can be shortened, and a yield can be improved.

Moreover, the non-contact power supplying device according to the first embodiment has an advantageous effect also in a case that electric power is transmitted concurrently to a plurality of power-receiving units 2 which have mutually-different distances from the power-feeding unit 1. Each power-receiving unit 2 detects an impedance value as viewed from the power-feeding side by the impedance detecting unit 4, and sends this detection result to the power-feeding unit 1. The power-feeding unit 1 calculates a total impedance against the power-receiving units 2 to which electric power is being fed, in order to set the frequency of alternating-current power which enlarges the power-transmission efficiency in accordance with the detected impedance values.

Since a frequency value indicated when this total impedance is lowest produces a favorable power-transmission efficiency for whole of the power-receiving units 2, this frequency value is set (determined) as the frequency of alternating-current power. Accordingly, the non-contact power supplying device according to the first embodiment can efficiently transmit electric power even if a plurality of the power-receiving units 2 are provided to have mutually-different coupling states with the power-feeding unit 1.

Moreover, in a case that power consumption of a certain power-receiving unit 2 is relatively high among the plurality of power-receiving units 2, the non-contact power supplying device according to the first embodiment can transmit electric power more efficiently by setting the AC-power frequency so as to enhance the power-transmission efficiency of the high-power-consumption power-receiving unit 2.

It is noted that the oscillator 11 corresponds to an oscillating means (or an oscillating section) the power-feeding resonator 12 corresponds to a power-feeding resonating means (or a power-feeding resonating section) the frequency-variable unit 3 corresponds to a frequency-variable means (or a frequency-variable section) the power-receiving resonator 21 corresponds to a power-receiving resonating means (or a power-receiving resonating section) and the impedance detecting unit 104 corresponds to an impedance detecting means (or an impedance detecting section).

### <<Second Embodiment>>

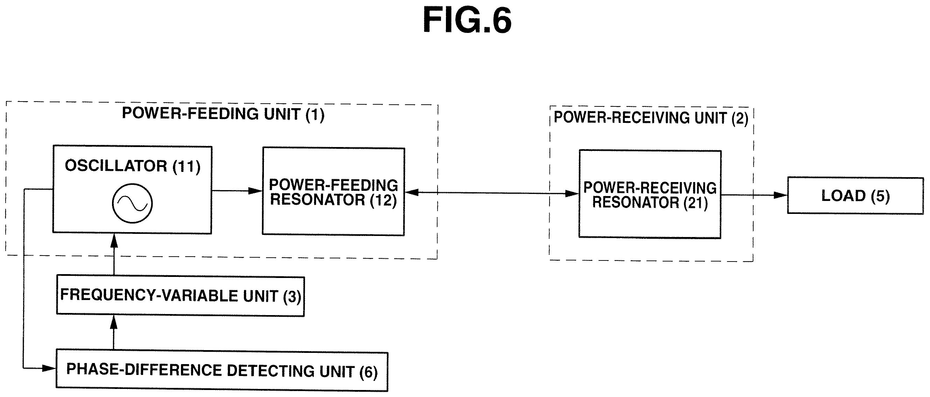

FIG. 6 is a block diagram showing a non-contact power supplying device in the embodiment according to the present invention. In this second embodiment, the non-contact power supplying device includes a phase-difference detecting unit 6 instead of the impedance detecting unit 4 of the above-mentioned first embodiment. This structure is different from the above-mentioned first embodiment. Since the other structures are similar as those of the first embodiment, explanations thereof will be omitted.

As shown in FIG. 6, in the non-contact power supplying device according to the second embodiment, the phase-difference detecting unit 6 is provided to the power-feeding unit 1 and detects a phase of impedance as viewed from the power-feeding side. The phase-difference detecting unit 6 is connected with the oscillator 11, and detects the impedance phase which is inputted to the power-feeding resonator 12.

AC power having the frequency set by the frequency-variable unit 3 is inputted to the power-feeding resonator 12, and then, the feeding power is transmitted from the power-feeding resonator 12 to the power-receiving resonator 21. This feeding power changes according to the coupling state between the power-feeding resonator 12 and the power-receiving resonator 21. Hence, in the non-contact power supplying device according to the second embodiment, the frequency value which can attain a favorable power-transmission efficiency is set as the frequency of AC power by detecting the phase of impedance as viewed from the power-feeding side.

Next, operations according to the second embodiment will now be explained.

At first, at step S20, the frequency-variable unit 3 starts a processing for searching an optimum frequency value of alternating-current power.

At step S21, the frequency-variable unit 3 carries out an initialization of the sweep frequency. At this time, the sweep frequency value is set at f1. At step S22, the frequency-variable unit 3 sets the frequency of alternating-current power of the oscillator 11. At this time, the frequency of AC power of the oscillator 11 is equal to f1 because of the processing of step S21.

At step S23, the phase-difference detecting unit 6 detects a phase of impedance of the feeding power which is supplied from the power-feeding unit 1 to the power-receiving unit 2, as viewed from the power-feeding side. Then, the phase detected by the phase-difference detecting unit 6 is sent to the frequency-variable unit 3.

At step S24, the frequency-variable unit 3 judges whether or not the settings of all the frequency values given within the predetermined range have been finished, i.e., whether or not the sweep frequency has already reached f2.

If the sweep frequency has not yet reached f2, the sweep frequency is updated to a next frequency value (at step S25). Then, the program returns to step S22, and the phase difference is detected by using the next frequency value.

If the sweep frequency has already reached f2 at step S24, the program proceeds to step S26. At step S26, the frequency-variable unit 3 sets (determines) a frequency value that causes the phase of impedance as viewed from the power-feeding side to become equal to 0, as an input frequency of alternating-current power for the oscillator 11. The efficiency of feeding power as viewed from the power-feeding side becomes high when the phase is equal to 0. Hence, by setting the frequency value at which the phase becomes equal to 0, as the frequency of alternating-current power for the oscillator 11; the efficiency of feeding power as viewed from the power-feeding side can be enhanced in the non-contact power supplying device according to the second embodiment.

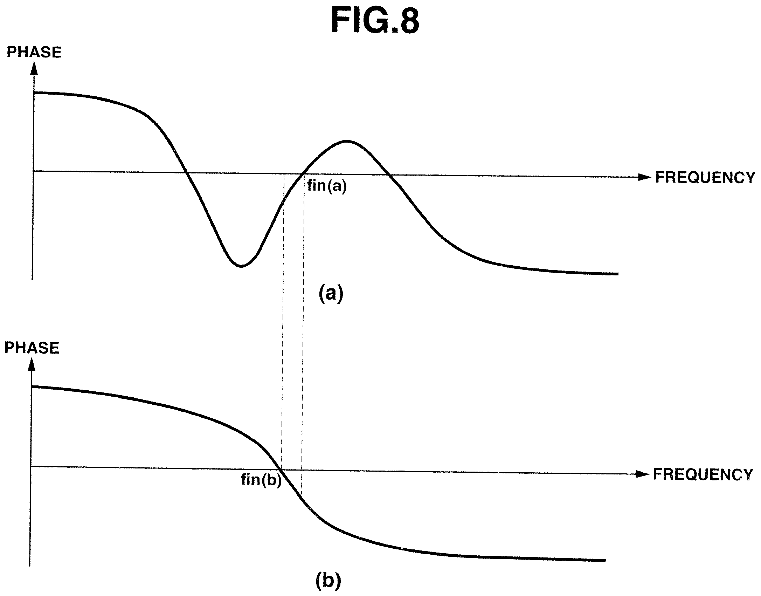

FIG. 8 is a view showing a phase difference of feeding power with respect to the sweep frequency, which was obtained by the frequency-variable unit 3 and the phase-difference detecting unit 6 through the above-mentioned series of steps. A shape difference between a graph (a) of FIG. 8 and a graph (b) of FIG. 8 is based on a difference of the distance between the power-feeding resonator 12 and the power-receiving resonator 21.

In the graph (a) of FIG. 8, there are three frequency values making the phase be equal to 0. On the other hand, in the graph (b) of FIG. 8, there is only one frequency value making the phase be equal to 0. Moreover, the frequency value (fin (a)) making the phase be equal to 0 in the graph (a) of FIG. 8 does not make the phase be equal to 0 in the graph (b) of FIG. 8. In the same manner, the frequency value (fin (b)) making the phase be equal to 0 in the graph (b) of FIG. 8 does not make the phase be equal to 0 in the graph (a) of FIG. 8. That is, since the phase is changed when the distance between the power-feeding resonator 12 and the power-receiving resonator 21 is changed, the efficiency of power feeding is reduced.

In the non-contact power supplying device according to the second embodiment, in the case that there are a plurality of frequency values causing the phase to be equal to 0, one of the plurality of frequency values which is closest to the resonant frequency of the power-feeding resonator 12 and the power-receiving resonator 21 may be set (determined) as the frequency of AC power.

In the non-contact power supplying device according to the second embodiment, the frequency-variable unit 3 and the phase-difference detecting unit 6 set the frequency value causing the phase of impedance of feeding power to be equal to 0 as viewed from the power-feeding side. Thereby, the frequency of AC power of the oscillator 11 can be changed. Accordingly, the non-contact power supplying device according to the second embodiment can change the frequency of AC power in accordance with the coupling state between the power-feeding resonator 12 and the power-receiving resonator 21, and thereby, can improve the efficiency of power feeding. Moreover, since the frequency value that can enhance the power-feeding efficiency can be set without needing to detect a situation of the power-receiving side, a structure for detecting the power-feeding efficiency does not need to be provided to the power-receiving unit 2.

It is noted that the phase-difference detecting unit 6 corresponds to a phase-difference detecting means (or a phase-difference detecting section).

## Claims

1. A non-contact power supplying device comprising:
a power-receiving resonating means (21) set to have a predetermined resonant frequency;
a power-feeding resonating means (12) set to have a resonance frequency equal to the predetermined resonant frequency;
an oscillating means (11) configured to input an alternating-current power into the power-feeding resonating means (12);
an impedance detecting means (4) configured to detect impedance within a predetermined frequency range as viewed from a power-feeding side; and
a frequency-variable means (3) configured to set a frequency of the alternating-current power,
wherein the oscillating means (11) is configured to supply electric power to the power-receiving resonating means (21) by producing a resonance between the power-receiving resonating means (21) and the power-feeding resonating means (12),
the impedance detecting means (4) is configured to set the predetermined frequency range on the basis of a coupling state between the power-receiving resonating means (21) and the power-feeding resonating means (12),
the frequency-variable means (3) is configured to set the frequency of the alternating-current power in accordance with a value of the impedance detected by the impedance detecting means (4) within the predetermined frequency range,
the impedance detecting means (4) is configured to detect a phase of impedance as viewed from the power-feeding side within the predetermined frequency range, the frequency-variable means (3) is configured to set a frequency value causing the phase of impedance to become equal to 0 within the predetermined frequency range, as the frequency of the alternating-current power, and
in a case that there are a plurality of frequency values causing the phase of impedance to become equal to 0, the frequency-variable means (3) sets a frequency value closest to the predetermined resonant frequency among the plurality of frequency values, as the frequency of the alternating-current power.

2. A non-contact power supplying device comprising:
a power-feeding resonating means (12) set to have a resonance frequency equal to a resonant frequency of a power-receiving resonating means (21);
an oscillating means (11) configured to input an alternating-current power into the power-feeding resonating means (12);
an impedance detecting means (4) configured to detect impedance within a predetermined frequency range as viewed from a power-feeding side; and
a frequency-variable means (3) configured to set a frequency of the alternating-current power,
wherein the oscillating means (11) is configured to supply electric power to the power-receiving resonating means (21) by producing a resonance between the power-receiving resonating means (21) and the power-feeding resonating means (12),
the impedance detecting means (4) is configured to set the predetermined frequency range on the basis of a coupling state between the power-receiving resonating means (21) and the power-feeding resonating means (12),
the frequency-variable means (3) is configured to set the frequency of the alternating-current power in accordance with a value of the impedance detected by the impedance detecting means (4) within the predetermined frequency range,
the impedance detecting means (4) is configured to detect a phase of impedance as viewed from the power-feeding side within the predetermined frequency range, the frequency-variable means (3) is configured to set a frequency value causing the phase of impedance to become equal to 0 within the predetermined frequency range, as the frequency of the alternating-current power, and
in a case that there are a plurality of frequency values causing the phase of impedance to become equal to 0, the frequency-variable means (3) sets a frequency value closest to the resonant frequency among the plurality of frequency values, as the frequency of the alternating-current power.

3. A non-contact power supplying device comprising:
a power-receiving resonating means (21) set to have a resonance frequency equal to a resonant frequency of a power-feeding resonating means (12);
an impedance detecting means (4) configured to detect impedance within a predetermined frequency range as viewed from a power-feeding side; and
a frequency-variable means (3) configured to set a frequency of alternating-current power which is inputted into the power-feeding resonating means (12) by an oscillating means (11),
wherein the power-receiving resonating means (21) is configured to receive electric power from the oscillating means (11) by a resonance between the power-receiving resonating means (21) and the power-feeding resonating means (12),
the impedance detecting means (4) is configured to set the predetermined frequency range on the basis of a coupling state between the power-receiving resonating means (21) and the power-feeding resonating means (12),
the frequency-variable means (3) is configured to set the frequency of the alternating-current power in accordance with a value of the impedance detected by the impedance detecting means (4) within the predetermined frequency range,
the impedance detecting means (4) is configured to detect a phase of impedance as viewed from the power-feeding side within the predetermined frequency range, the frequency-variable means (3) is configured to set a frequency value causing the phase of impedance to become equal to 0 within the predetermined frequency range, as the frequency of the alternating-current power, and
in a case that there are a plurality of frequency values causing the phase of impedance to become equal to 0, the frequency-variable means (3) sets a frequency value closest to the resonant frequency among the plurality of frequency values, as the frequency of the alternating-current power.

4. The non-contact power supplying device according to one of Claims 1 to 3, wherein
the impedance detecting means (4) is configured to detect an absolute value of impedance as viewed from the power-feeding side within the predetermined frequency range,
the frequency-variable means (3) is configured to set a frequency value causing the absolute value of impedance to become its local minimum within the predetermined frequency range, as the frequency of the alternating-current power.

5. The non-contact power supplying device according to Claim 4, wherein
in a case that there are a plurality of frequency values causing the absolute value of impedance to become its local minimum, the frequency-variable means (3) sets a frequency value closest to the predetermined resonant frequency among the plurality of frequency values, as the frequency of the alternating-current power.

6. A non-contact power supplying method comprising:
a step of oscillating an alternating-current power;
a step of feeding an electric power by generating a magnetic field based on the alternating-current power;
a step of receiving the electric power by use of electromagnetic resonance in the magnetic field;
a step of setting a predetermined frequency range on the basis of a coupling state between a power-receiving side and a power-feeding side;
a step of detecting an impedance within a the predetermined frequency range as viewed from a the power-feeding side;
the impedance detecting means (4) is configured to detect a phase of impedance as viewed from the power-feeding side within the predetermined frequency range, the frequency-variable means (3) is configured to set a frequency value causing the phase of impedance to become equal to 0 within the predetermined frequency range, as the frequency of the alternating-current power, and
in a case that there are a plurality of frequency values causing the phase of impedance to become equal to 0, the frequency-variable means (3) sets a frequency value closest to the predetermined resonant frequency among the plurality of frequency values, as the frequency of the alternating-current power.

## Patentansprüche

1. Kontaktlose Stromversorgungsvorrichtung, umfassend:
eine stromaufnehmende Resonanzeinrichtung (21), eingestellt, um eine vorgegebene Resonanzfrequenz aufzuweisen;
eine stromzuführende Resonanzeinrichtung (12), eingestellt, um eine Resonanzfrequenz aufzuweisen, die gleich der vorgegebenen Resonanzfrequenz ist;
eine Oszillationseinrichtung (11), gestaltet, um eine Wechselstromleistung in die stromzuführende Resonanzeinrichtung (12) einzugeben;
eine Impedanzermittlungseinrichtung (4), gestaltet, um Impedanz innerhalb eines vorgegebenen Frequenzbereichs, von einer stromzuführenden Seite aus betrachtet, zu ermitteln; und
eine Frequenzänderungseinrichtung (3) (frequency-variable means), gestaltet, um eine Frequenz des Wechselstroms einzustellen,
wobei die Oszillationseinrichtung (11) gestaltet ist, um der stromaufnehmenden Resonanzeinrichtung (21) durch Erzeugen einer Resonanz zwischen der stromaufnehmenden Resonanzeinrichtung (21) und der stromzuführenden Resonanzeinrichtung (12) elektrische Energie zuzuführen,
die Impedanzermittlungseinrichtung (4) gestaltet ist, um den vorgegebenen Frequenzbereich auf der Grundlage eines Kopplungszustandes zwischen der stromaufnehmenden Resonanzeinrichtung (21) und der stromzuführenden Resonanzeinrichtung (12) einzustellen,
die Frequenzänderungseinrichtung (3) gestaltet ist, um die Frequenz des Wechselstroms in Übereinstimmung mit einem Wert der Impedanz, der durch die Impedanzermittlungseinrichtung (4) ermittelt wird, innerhalb des vorgegebenen Frequenzbereichs einzustellen,
die Impedanzermittlungseinrichtung (4) gestaltet ist, eine Impedanzphase, von der stromzuführenden Seite aus betrachtet, innerhalb des vorgegebenen Frequenzbereichs zu ermitteln, wobei die Frequenzänderungseinrichtung (3) gestaltet ist, als die Frequenz des Wechselstroms einen Frequenzwert, der die Impedanzphase veranlasst, gleich 0 zu werden, innerhalb des vorgegebenen Frequenzbereichs einzustellen und
wobei in einem Fall, dass dort eine Vielzahl an Frequenzwerten die Impedanzphase veranlasst, gleich 0 zu werden, die Frequenzänderungseinrichtung (3) als die Frequenz des Wechselstroms einen Frequenzwert einstellt, der der vorgegebenen Resonanzfrequenz unter der Vielzahl an Frequenzwerten am nächsten kommt.

2. Kontaktlose Stromversorgungsvorrichtung, umfassend:
eine stromzuführende Resonanzeinrichtung (12), eingestellt, um eine Resonanzfrequenz aufzuweisen, die gleich einer Resonanzfrequenz einer stromaufnehmenden Resonanzeinrichtung (21) ist;
eine Oszillationseinrichtung (11), gestaltet, um einen Wechselstrom in die stromzuführende Resonanzeinrichtung (12) einzugeben;
eine Impedanzermittlungseinrichtung (4), gestaltet, um Impedanz innerhalb eines vorgegebenen Frequenzbereichs, von einer stromzuführenden Seite aus betrachtet, zu ermitteln; und
eine Frequenzänderungseinrichtung (3), gestaltet, um eine Frequenz des Wechselstroms einzustellen,
wobei die Oszillationseinrichtung (11) gestaltet ist, um der stromaufnehmenden Resonanzeinrichtung (21) durch Erzeugen einer Resonanz zwischen der stromaufnehmenden Resonanzeinrichtung (21) und der stromzuführenden Resonanzeinrichtung (12) elektrische Energie zuzuführen,
die Impedanzermittlungseinrichtung (4) gestaltet ist, um den vorgegebenen Frequenzbereich auf der Grundlage eines Kopplungszustandes zwischen der stromaufnehmenden Resonanzeinrichtung (21) und der stromzuführenden Resonanzeinrichtung (12) einzustellen,
die Frequenzänderungseinrichtung (3) gestaltet ist, um die Frequenz des Wechselstroms in Übereinstimmung mit einem Wert der Impedanz, der durch die Impedanzermittlungseinrichtung (4) ermittelt wird, innerhalb des vorgegebenen Frequenzbereichs einzustellen,
die Impedanzermittlungseinrichtung (4) gestaltet ist, eine Impedanzphase, von der stromzuführenden Seite aus betrachtet, innerhalb des vorgegebenen Frequenzbereichs zu ermitteln, wobei die Frequenzänderungseinrichtung (3) gestaltet ist, als die Frequenz des Wechselstroms einen Frequenzwert, der die Impedanzphase veranlasst, gleich 0 zu werden, innerhalb des vorgegebenen Frequenzbereichs einzustellen, und wobei
in einem Fall, dass dort eine Vielzahl an Frequenzwerten die Impedanzphase veranlasst, gleich 0 zu werden, die Frequenzänderungseinrichtung (3) als die Frequenz des Wechselstroms einen Frequenzwert einstellt, der der vorgegebenen Resonanzfrequenz unter der Vielzahl an Frequenzwerten am nächsten kommt.

3. Kontaktlose Stromversorgungsvorrichtung, umfassend:
eine stromaufnehmende Resonanzeinrichtung (21), eingestellt, um eine Resonanzfrequenz aufzuweisen, die gleich einer Resonanzfrequenz einer stromzuführenden Resonanzeinrichtung (12) ist;
eine Impedanzermittlungseinrichtung (4), gestaltet, um Impedanz innerhalb eines vorgegebenen Frequenzbereichs, von einer stromzuführenden Seite aus betrachtet, zu ermitteln; und
eine Frequenzänderungseinrichtung (3), gestaltet, um eine Frequenz eines Wechselstroms einzustellen, der in die stromzuführende Resonanzeinrichtung (12) mittels einer Oszillationseinrichtung (11) eingegeben wird,
wobei die stromaufnehmende Resonanzeinrichtung (21) gestaltet ist, durch eine Resonanz zwischen der stromaufnehmenden Resonanzeinrichtung (21) und der stromzuführenden Resonanzeinrichtung (12) von der Oszillationseinrichtung (11) elektrische Energie aufzunehmen,
die Impedanzermittlungseinrichtung (4) gestaltet ist, um den vorgegebenen Frequenzbereich auf der Grundlage eines Kopplungszustandes zwischen der stromaufnehmenden Resonanzeinrichtung (21) und der stromzuführenden Resonanzeinrichtung (12) einzustellen,
die Frequenzänderungseinrichtung (3) gestaltet ist, um die Frequenz des Wechselstroms in Übereinstimmung mit einem Wert der Impedanz, der durch die Impedanzermittlungseinrichtung (4) ermittelt wird, innerhalb des vorgegebenen Frequenzbereichs einzustellen,
die Impedanzermittlungseinrichtung (4) gestaltet ist, eine Impedanzphase, von der stromzuführenden Seite aus betrachtet, innerhalb des vorgegebenen Frequenzbereichs zu ermitteln, wobei die Frequenzänderungseinrichtung (3) gestaltet ist, als die Frequenz des Wechselstroms einen Frequenzwert, der die Impedanzphase veranlasst, gleich 0 zu werden, innerhalb des vorgegebenen Frequenzbereichs einzustellen, und wobei
in einem Fall, dass dort eine Vielzahl an Frequenzwerten die Impedanzphase veranlasst gleich 0 zu werden, die Frequenzänderungseinrichtung (3) als die Frequenz des Wechselstroms einen Frequenzwert einstellt, der der Resonanzfrequenz unter der Vielzahl an Frequenzwerten am nächsten kommt.

4. Kontaktlose Stromversorgungsvorrichtung nach einem der Ansprüche 1 bis 3. wobei
die Impedanzermittlungseinrichtung (4) gestaltet ist, um einen Absolutwert der Impedanz, von der stromzuführenden Seite aus betrachtet, innerhalb des vorgegebenen Frequenzbereichs zu ermitteln,
die Frequenzänderungseinrichtung (3), gestaltet ist, um einen Frequenzwert als die Frequenz des Wechselstroms, der den Absolutwert der Impedanz veranlasst, sein lokales Minimum anzunehmen, innerhalb des Frequenzbereichs einzustellen.

5. Kontaktlose Stromversorgungsvorrichtung nach Anspruch 4, wobei
in einem Fall, dass dort eine Vielzahl an Frequenzwerten den Absolutwert der Impedanz veranlasst, ein lokales Minimum anzunehmen, die Frequenzänderungseinrichtung (3) einen Frequenzwert als die Frequenz des Wechselstrome einstellt, der der vorgegebenen Resonanzfrequenz unter der Vielzahl an Frequenzwerten am nächsten kommt.

6. Kontaktlose Stromversorgungsverfahren, umfassend:
einen Schritt des Oszillierens einer Wechselstromleistung;
einen Schritt der Zufuhr von elektrischer Energie durch Erzeugen eines magnetischen Feldes auf Grundlage der Wechselstromleistung;
einen Schritt des Aufnehmens elektrischer Energie durch Anwendung elektromagnetischer Resonanz in dem magnetischen Feld;
einen Schritt der Einstellung eines vorgegebenen Frequenzbereichs auf der Grundlage eines Kopplungszustandes zwischen einer stromaufnehmenden Seite und einer stromzuführenden Seite;
einen Schritt der Ermittlung einer Impedanz, von einer stromzuführenden Seite aus betrachtet, innerhalb eines vorgegebenen Frequenzbereichs;
wobei die Impedanzermittlungseinrichtung (4) gestaltet ist, eine Impedanzphase, von der stromzuführenden Seite aus betrachtet, innerhalb des vorgegebenen Frequenzbereichs zu ermitteln, wobei die Frequenzänderungseinrichtung (3) gestaltet ist, als die Frequenz des Wechselstroms einen Frequenzwert, der die Impedanzphase veranlasst, gleich 0 zu werden, innerhalb des vorgegebenen Frequenzbereichs einzustellen, und wobei
in einem Fall, dass dort eine Vielzahl an Frequenzwerten die Impedanzphase veranlasst, gleich 0 zu werden, die Frequenzänderungseinrichtung (3) als die Frequenz des Wechselstroms einen Frequenzwert einstellt, der der vorgegebenen Resonanzfrequenz unter der Vielzahl an Frequenzwerten am nächsten kommt.

## Revendications

1. Dispositif d'alimentation sans contact comprenant :
un moyen résonnant de réception de puissance (21) réglé pour présenter une fréquence de résonance prédéterminée,
un moyen résonnant de fourniture de puissance (12) réglé pour présenter une fréquence de résonance égale à la fréquence de résonance prédéterminée,
un moyen oscillant (11) configuré pour recevoir en entrée une puissance en courant alternatif dans le moyen résonnant de fourniture de puissance (12),
un moyen de détection d'impédance (4) configuré pour détecter une impédance dans une plage de fréquences prédéterminée telle qu'elle est vue depuis le côté de fourniture de puissance, et
un moyen à fréquence variable (3) configuré pour régler la fréquence de la puissance en courant alternatif,
dans lequel le moyen oscillant (11) est configuré pour fournir la puissance électrique au moyen résonnant de réception de puissance (21) en générant une résonance entre le moyen résonnant de réception de puissance (21) et le moyen résonnant de fourniture de puissance (12),
le moyen de détection d'impédance (4) est configuré pour régler la plage de fréquences prédéterminée sur la base de l'état de couplage entre le moyen résonnant de réception de puissance (21) et le moyen résonnant de fourniture de puissance (12),
le moyen à fréquence variable (3) est configuré pour régler la fréquence de la puissance en courant alternatif en fonction de la valeur de l'impédance détectée par le moyen de détection d'impédance (4) dans la plage de fréquences prédéterminée,
le moyen de détection d'impédance (4) est configuré pour détecter la phase de l'impédance telle qu'elle est vue depuis le côté de fourniture de puissance à l'intérieur de la plage de fréquences prédéterminée, le moyen à fréquence variable (3) étant configuré pour régler en tant que fréquence de la puissance en courant alternatif une valeur de fréquence amenant la phase de l'impédance à s'annuler dans la plage de fréquences prédéterminée, et
dans le cas où il existe une pluralité de valeurs de fréquences amenant la phase de l'impédance à s'annuler, le moyen à fréquence variable (3) règle en tant que fréquence de la puissance en courant alternatif la valeur de fréquence la plus proche de la fréquence de résonance prédéterminée parmi la pluralité de valeurs de fréquence.

2. Dispositif d'alimentation sans contact comprenant :
un moyen résonnant de fourniture de puissance (12) réglé pour présenter une fréquence de résonance égale à la fréquence de résonance d'un moyen résonnant de réception de puissance (21),
un moyen oscillant (11) configuré pour recevoir en entrée une puissance en courant alternatif dans le moyen résonnant de fourniture de puissance (12),
un moyen de détection d'impédance (4) configuré pour détecter une impédance dans une plage de fréquences prédéterminée telle qu'elle est vue depuis le côté de fourniture de puissance, et
un moyen à fréquence variable (3) configuré pour régler la fréquence de la puissance en courant alternatif,
dans lequel le moyen oscillant (11) est configuré pour fournir la puissance électrique au moyen résonnant de réception de puissance (21) en générant une résonance entre le moyen résonnant de réception de puissance (21) et le moyen résonnant de fourniture de puissance (12),
le moyen de détection d'impédance (4) est configuré pour régler la plage de fréquences prédéterminée sur la base de l'état de couplage entre le moyen résonnant de réception de puissance (21) et le moyen résonnant de fourniture de puissance (12),
le moyen à fréquence variable (3) est configuré pour régler la fréquence de la puissance en courant alternatif en fonction de la valeur de l'impédance détectée par le moyen de détection d'impédance (4) dans la plage de fréquences prédéterminée,
le moyen de détection d'impédance (4) est configuré pour détecter la phase de l'impédance telle qu'elle est vue depuis le côté de fourniture de puissance à l'intérieur de la plage de fréquences prédéterminée, le moyen à fréquence variable (3) étant configuré pour régler en tant que fréquence de la puissance en courant alternatif une valeur de fréquence amenant la phase de l'impédance à s'annuler dans la plage de fréquences prédéterminée, et
dans le cas où il existe une pluralité de valeurs de fréquences amenant la phase de l'impédance à s'annuler, le moyen à fréquence variable (3) règle en tant que fréquence de la puissance en courant alternatif la valeur de fréquence la plus proche de la fréquence de résonance parmi la pluralité de valeurs de fréquence.

3. Dispositif d'alimentation sans contact comprenant :
un moyen résonnant de réception de puissance (21) réglé pour présenter une fréquence de résonance égale à la fréquence de résonance d'un moyen résonnant de fourniture de puissance (12),
un moyen de détection d'impédance (4) configuré pour détecter une impédance dans une plage de fréquences prédéterminée telle qu'elle est vue depuis le côté de fourniture de puissance, et
un moyen à fréquence variable (3) configuré pour régler la fréquence de la puissance en courant alternatif qui est reçue en entrée du moyen résonnant de fourniture de puissance (12) grâce à un moyen oscillant (11),
dans lequel le moyen résonnant de réception de puissance (21) est configuré pour recevoir la puissance électrique provenant du moyen oscillant (11) grâce à une résonance entre le moyen résonnant de réception de puissance (21) et le moyen résonnant de fourniture de puissance (12),
le moyen de détection d'impédance (4) est configuré pour régler la plage de fréquences prédéterminée sur la base de l'état de couplage entre le moyen résonnant de réception de puissance (21) et le moyen résonnant de fourniture de puissance (12),
le moyen à fréquence variable (3) est configuré pour régler la fréquence de la puissance en courant alternatif en fonction de la valeur de l'impédance détectée par le moyen de détection d'impédance (4) dans la plage de fréquences prédéterminée,
le moyen de détection d'impédance (4) est configuré pour détecter la phase de l'impédance telle qu'elle est vue depuis le côté de fourniture de puissance à l'intérieur de la plage de fréquences prédéterminée, le moyen à fréquence variable (3) étant configuré pour régler en tant que fréquence de la puissance en courant alternatif une valeur de fréquence amenant la phase de l'impédance à s'annuler dans la plage de fréquences prédéterminée, et
dans le cas où il existe une pluralité de valeurs de fréquences amenant la phase de l'impédance à s'annuler, le moyen à fréquence variable (3) règle en tant que fréquence de la puissance en courant alternatif la valeur de fréquence la plus proche de la fréquence de résonance parmi la pluralité de valeurs de fréquence.

4. Dispositif d'alimentation sans contact selon l'une des revendications 1 à 3, dans lequel :
le moyen de détection d'impédance (4) est configuré pour détecter la valeur absolue de l'impédance telle qu'elle est vue depuis le côté de fourniture de puissance dans la plage de fréquences prédéterminée,
le moyen à fréquence variable (3) est configuré pour régler en tant que fréquence de la puissance en courant alternatif une valeur de fréquence amenant la valeur absolue de l'impédance à prendre pour valeur son minimum local dans la plage de fréquences prédéterminée.

5. Dispositif d'alimentation sans contact selon la revendication 4, dans lequel :
dans le cas où il existe une pluralité de valeurs de fréquences amenant la valeur absolue de l'impédance à prendre pour valeur son minimum local, le moyen à fréquence variable (3) règle en tant que fréquence de la puissance en courant alternatif la valeur de fréquence la plus proche de la fréquence de résonance prédéterminée parmi la pluralité de valeurs de fréquence.

6. Procédé d'alimentation sans contact comprenant :
une étape de mise en oscillation d'une puissance en courant alternatif,
une étape de fourniture de la puissance électrique en générant un champ magnétique fondé sur la puissance en courant alternatif,
une étape de réception de la puissance électrique grâce à l'utilisation de la résonance électromagnétique dans le champ magnétique,
une étape de réglage d'une plage de fréquences prédéterminée sur la base de l'état de couplage entre le côté de réception de puissance et le côté de fourniture de puissance,
une étape de détection de l'impédance dans la plage de fréquences prédéterminée telle qu'elle est vue depuis le côté de fourniture de puissance,
le moyen de détection d'impédance (4) est configuré pour détecter la phase de l'impédance telle qu'elle est vue depuis le côté de fourniture de puissance dans la plage de fréquences prédéterminée, le moyen à fréquence variable (3) étant configuré pour régler en tant que fréquence de la puissance en courant alternatif la valeur de fréquence amenant la phase de l'impédance à s'annuler dans la plage de fréquences prédéterminée, et
dans le cas où il existe une pluralité de valeurs de fréquences amenant la phase de l'impédance à s'annuler, le moyen à fréquence variable (3) règle en tant que fréquence de la puissance en courant alternatif la valeur de fréquence la plus proche de la fréquence de résonance prédéterminée parmi la pluralité de valeurs de fréquence.
